# EUROPÄISCHE PATENTANMELDUNG

(11) **EP 2 495 816 A1**
(43) Veröffentlichungstag der Anmeldung: **05.09.2012**
(21) Anmeldenummer: 11156913.3
(22) Anmeldetag: 04.03.2011
(51) Int. Cl.: H01R 4/64

(54) **Elektrische Leiteranordnung, Insbesondere als Bestandteil einer Photovoltaikanlage**

(71) Anmelder: HILTI Aktiengesellschaft, 9494 Schaan (LI)
(72) Erfinder: Bragagna, Elio, 6822, Duens (AT); Mundwiler, Lukas, 4434, Hoelstein (CH)

(57) **Zusammenfassung**

Die Erfindung betrifft eine elektrische Leiteranordnung, mit einem ersten elektrisch leitfähigen Element, einem zweiten elektrisch leitfähigen Element, und einer elektrisch leitfähigen und mit einem Gewinde versehenen Stange, über welche die beiden Elemente miteinander in elektrischem Kontakt stehen. Erfindungsgemäss ist vorgesehen, dass die Stange zumindest abschnittsweise zwischen den beiden leitfähigen Elementen eingebettet ist.

## Beschreibung

Die Erfindung betrifft eine elektrische Leiteranordnung, insbesondere als Bestandteil einer Photovoltaikanlage, gemäss dem Oberbegriff des Anspruchs 1. Eine solche Anordnung ist ausgebildet mit einem ersten elektrisch leitfähigen Element, einem zweiten elektrisch leitfähigen Element und einer elektrisch leitfähigen und mit einem Gewinde versehenen Stange, über welche die beiden Elemente miteinander in elektrischem Kontakt stehen.

Beim Betrieb von Photovoltaikanlagen kann es unter Umständen zu einer unerwünschten elektrischen Aufladung des Aussenrahmens der Photovoltaikmodule kommen. Eine solche Aufladung kann ihre Ursache beispielsweise in feuchtebedingten Fehlströmen aus den Solarzellen oder in atmosphärischen Effekten haben. Da eine elektrische Aufladung unter Umständen zu Funkenschlag führen kann und potenziell eine Gefahr für Mensch und Material darstellt, sind die Aussenrahmen der Photovoltaikmodule häufig geerdet.

Eine mögliche Erdungsmassnahme kann eine elektrisch leitfähige Verbindung von jedem Modulrahmen zur dazugehörigen Unterkonstruktion sein. Eine solche Verbindung kann durch Kabel realisiert werden, deren Kabelenden unter Zuhilfenahme von Schrauben einerseits am jeweiligen Modulrahmen und andererseits an der Unterkonstruktion befestigt werden. Hierdurch können die Modulrahmen untereinander und mit der Unterkonstruktion verbunden werden. Das Anbringen der sogenannten Erdungskabel kann jedoch mit einem vergleichsweise hohen Arbeitsaufwand verbunden sein.

Eine weitere mögliche Erdungsmassnahme sind Kontaktplättchen, deren Kontaktfläche derart strukturiert ist, dass sie sich beim Festziehen der Modulklemmen der Photovoltaikmodule selbständig durch die Beschichtung des Photovoltaikmodulrahmens und der Unterkonstruktion durchschneidet.

Eine Anordnung zum Herstellen einer elektrisch leitenden Verbindung zwischen zwei Elementen im KFZ-Bereich ist aus der DE 10 2007 027 497 A1 bekannt. Die DE 10 2007 027 497 A1 lehrt, in den Elementen jeweils eine Durchgangsöffnung vorzusehen, die beiden Durchgangsöffnungen in eine fluchtende Position zu bringen und durch die beiden Durchgangsöffnungen einen Bolzen hindurchzustecken. Dabei wird durch den Bolzen nicht nur eine elektrisch leitfähige Verbindung hergestellt, sondern es werden zugleich auch die beiden Durchgangsöffnungen in der fluchtenden Position fixiert.

Die US2007248434A lehrt, zum Zwecke der Herstellung einer elektrisch leitenden Verbindung an einer Photovoltaikanlage einen Bolzen durch zwei fluchtende Ausnehmungen in benachbarten Elementen zu stecken, wobei die benachbarten Elemente im Falle der US2007248434A über eine verzahnte Scheibe, die den Bolzen umgibt, elektrisch miteinander verbunden werden.

Aufgabe der Erfindung ist es, eine besonders vielseitig einsetzbare und dabei kostengünstige, einfach zu montierende und zuverlässige elektrische Leiteranordnung zu schaffen.

Die Aufgabe wird erfindungsgemäss durch eine Anordnung mit den Merkmalen des Anspruchs 1 gelöst. Bevorzugte Ausführungsformen sind in den abhängigen Ansprüchen angegeben.

Eine erfindungsgemässe Leiteranordnung ist dadurch gekennzeichnet, dass die Stange zumindest abschnittsweise zwischen den beiden leitfähigen Elementen eingebettet ist.

Ein Grundgedanke der Erfindung kann darin gesehen werden, die zur Herstellung der elektrischen Verbindung der beiden Elemente vorgesehene Gewindestange zumindest bereichsweise längs der einander zugewandten Oberflächen der beiden Elemente zu führen, so dass die Gewindestange zumindest bereichsweise zwischen den beiden Elementen verläuft.

Im Gegensatz zu einer Anordnung mit einem festgeschraubten Erdungskabel ist bei der Montage der erfindungsgemässen Anordnung keine fluchtende Positionierung zweier Durchgangsöffnungen erforderlich, so dass nach der Erfindung eine besonders einfache und schnelle Montage möglich ist, zumal erfindungsgemäss die Herstellung der elektrischen Verbindung auch besonders einfach in den Montageprozess einer der beiden Elementen integrierbar ist. Da die erfindungsgemäss eingebettete Positionierung mit geometrisch einfachen Bauteilen ausgeführt werden kann, kann sie überdies auch besonders kostengünstig ausgeführt werden. Ferner kann entsprechend der Erfindung in besonders einfacher Weise visuell, nämlich durch Prüfung ob die Schraube vorhanden ist, überprüft werden, ob eine elektrische Verbindung, insbesondere Erdungsverbindung besteht. Darüber hinaus kann die erfindungsgemäss eingebettete Positionierung besonders grosse elektrische Kontaktflächen zwischen der Stange und den benachbarten Elementen zur Verfügung stellen, so dass eine besonders hohe Zuverlässigkeit gegeben ist. Im Gegensatz zu Anordnungen gemäss dem Stand der Technik, bei denen die Erdungsschraube zwei Durchgangsöffnungen der beiden verbundenen Elemente in einer fluchtenden Position hält, ermöglicht es die erfindungsgemäss eingebettete Positionierung der Gewindestange auch, die elektrische Verbindung der beiden Elemente zu einem gewissen Grad von der mechanischen Verbindung der beiden Elementen zu trennen, was den konstruktiven Gestaltungsspielraum erhöht und somit ein besonders vielseitiges Einsatzspektrum eröffnet.

Die erfindungsgemäss eingebettete Anordnung der Stange kann insbesondere beinhalten, dass sich die Stange in ihrer Längsrichtung gesehen zumindest abschnittsweise entlang beider Elemente erstreckt und dabei mit beiden Elementen in Kontakt steht, und/oder dass die Stange an ihrer Mantelfläche zumindest einen zylindrischen Kontaktbereich aufweist, in dem die Stange mit beiden Elementen in Kontakt steht. Auch kann die Erfindung beinhalten, dass zumindest eines der Elemente die Stange nur unvollständig, also nicht ringartig, umgibt, und die Stange insbesondere nur tangiert. Handelt es sich beispielsweise beim ersten Element um den Rahmen eines Solarmoduls, so muss dieser nicht eigens für die Stange mit einer Durchgangsöffnung modifiziert werden, sondern er kann einfach mit einer Flachseite an der Stange anliegen.

Beispielsweise für eine besonders hohe mechanische Stabilität kann vorgesehen sein, dass das erste Element in der Umgebung der Schraube einen ebenen Oberflächenbereich aufweist, der dem zweiten Element zugewandt ist. An diesem Oberflächenbereich kann das erste Element, insbesondere vor Montage der Stange, am zweiten Element aufliegen. Die erfindungsgemäss eingebettete Anordnung der Stange kann beinhalten, dass die Längsachse der Stange zumindest annähernd parallel zu diesem ebenen Oberflächenbereich verläuft, hierzu also einen Winkel von kleiner 30°, insbesondere kleiner 10°, 5° oder 1° aufweist. Das zweite Element kann in analoger Weise ausgeführt sein.

Eine besonders bevorzugte Ausführung der Erfindung liegt darin, dass zumindest das zweite Element eine Führungsbohrung aufweist, durch welche die Stange hindurchgeführt ist. Hierdurch kann eine besonders zuverlässige Positionierung der Stange bei der Montage, insbesondere zu Beginn des Eindrehvorgangs der Stange zwischen die beiden Elemente, gewährleistet werden.

Im einfachsten Fall können bei einer erfindungsgemäss eingebetteten Anordnung der Gewindestange die beiden Elemente im Bereich der Stange eben ausgebildet sein. Besonders bevorzugt ist es jedoch, dass zumindest das zweite Element eine, vorzugsweise zumindest abschnittsweise halbzylindrische, Nut aufweist, in der die Stange verläuft. Hierdurch kann die Zuverlässigkeit bei der Positionierung weiter verbessert werden und insbesondere verhindert werden, dass die Stange beim Eindrehen zwischen die Elemente in Radialrichtung wegläuft. Darüber hinaus kann durch eine Nut die elektrische Kontaktfläche zwischen der Stange und dem zweiten Element vergrössert werden. Sofern das zweite Element eine solche Nut aufweist, kann das erste Element im Bereich der Stange eben ausgebildet sein, was mit besonders niedrigen Fertigungskosten einhergeht. Sofern es sich bei dem ersten Element um den Rahmen eines Solarmoduls handelt, muss dieser für die Verwendung in der erfindungsgemässen Anordnung nicht modifiziert werden.

Besonders zweckmässig ist es, dass die Stange durch ein drittes, vorzugsweise elektrisch leitfähiges, Element, insbesondere durch einen Windabweiser, hindurchgeführt ist. Gemäss dieser Ausführungsform kann die Stange in besonders einfacher Weise auch zum Festlegen und/oder elektrischen Kontaktieren des dritten Elements genutzt werden, so dass Kosten und Installationszeit eingespart werden können.

Eine weitere bevorzugte Weiterbildung der Erfindung liegt darin, dass die Stange einen Schraubenkopf aufweist. Gemäss dieser Ausführungsform weist die erfindungsgemässe Leiteranordnung eine Schraube auf, deren Schaft durch die Stange gebildet wird. Der Schraubenkopf kann dem Angriff eines Drehwerkzeugs dienen. Darüber hinaus kann mittels des Schraubenkopfs das dritte Element am ersten Element und/oder am zweiten Element fixiert werden und eine elektrische Verbindung zwischen der Stange und dem dritten Element hergestellt werden.

Demgemäss ist es besonders bevorzugt, dass der Schraubenkopf das dritte Element formschlüssig fixiert. Der Schraubenkopf kann hierzu unmittelbar oder beispielsweise über eine leitfähige Ringscheibe auf dem dritten leitfähigen Element aufliegen.

Für einen besonders guten Kontakt und/oder eine besonders gute mechanische Festigkeit kann vorgesehen sein, dass das erste Element und/oder das zweite Element eine Negativform für das Gewinde aufweist, in welcher das Gewinde teilweise aufgenommen ist. Hierüber kann ein Formschluss zwischen den Elementen und der Stange realisiert werden. Grundsätzlich kann die Negativform bereits bei der Fertigung des ersten und/oder zweiten Elements eingebracht werden. Besonders bevorzugt ist es jedoch, dass das Gewinde der Stange selbstschneidend ist, so dass die Negativform beim Einschrauben der Stange eingefurcht wird. Es kann auch vorgesehen werden, dass die Negativform dann entsteht, wenn das erste Element bei dazwischen liegender Stange mit dem zweiten Element, z.B. mittels Modulklemmen, verpresst wird.

Besonders bevorzugt ist es, dass das erste Element und/oder das zweite Element zumindest im Bereich der Stange Aluminium aufweist und dass die Stange eine Zink-Nickel-Beschichtung aufweist. Insbesondere kann die Schraube ihrem Kern Stahl aufweisen. Es hat sich in überraschender Weise gezeigt, dass mit einer solchen Materialkombination einerseits eine besonders leichte und zugleich stabile Anordnung erhalten werden kann, was im Hinblick auf die Montage vorteilhaft ist, dass zugleich aber eine besonders hohe Korrosionsbeständigkeit erhalten werden kann, was insbesondere im Hinblick auf Aussenanwendungen vorteilhaft ist. Beispielsweise kann vorgesehen sein, dass das zweite Element zumindest im Bereich der Stange aus einer Aluminium-Druckgusslegierung gefertigt ist. Es hat sich gezeigt, dass ein solches Material ein selbstschneidendes Einfurchen einer Gewindestange aus Stahl erlaubt, so dass es in besonders kostengünstiger Weise nicht erforderlich ist, vorab eine Negativform für das Gewinde vorzusehen. Die Stange kann insbesondere aus Stahl, vorzugsweise einem C-Stahl gefertigt sein, mit Zink-Nickel beschichtet sein und/oder mit einem Gleitmittel versiegelt sein.

Die Erfindung betrifft auch eine Solaranlage, insbesondere eine Photovoltaikanlage, mit einer erfindungsgemässen elektrischen Leiteranordnung, wobei das erste Element ein Rahmen eines Solarmoduls, insbesondere Photovoltaikmoduls ist, und das zweite Element eine Unterkonstruktion des Solarmoduls ist. Das gegebenenfalls vorgesehene dritte Element kann ein Windschabweiser sein, der dem Solarmodul zugeordnet ist.

Die Erfindung betrifft ferner ein Verfahren zur Montage einer erfindungsgemässen Anordnung, bei dem zunächst die beiden Elemente mittels zumindest einer Modulklemme aneinander befestigt werden und anschliessend die Stange zwischen die Elemente eingeschraubt wird. Da hierbei die elektrischen Kontaktflächen bei einem Einschraubvorgang hergestellt werden, kann bei dieser Ausführungsform die Kontaktzuverlässigkeit unter Umständen noch weiter erhöht werden. Bei dieser Verfahrensführung kann das Gewinde bei einer Drehbewegung in eines oder beide Elemente materialverdrängend eindringen.

Weiterhin betrifft die Erfindung auch ein Verfahren zur Montage einer erfindungsgemässen Anordnung, bei dem zunächst die Stange am zweiten Element, insbesondere in einer im zweiten Element vorgesehenen Nut, angeordnet wird und anschliessend die beiden Elemente mittels zumindest einer Modulklemme aneinander befestigt werden. Bei dieser Verfahrensführung kann das Gewinde der Stange beim Anziehen der Modulklemme, also bei einer linearen Bewegung, in eines oder beide Elemente materialverdrängend eindringen. Bei dieser Variante könnte die Stange auch vormontiert werden, was den Montageaufwand auf der Baustelle reduzieren kann.

Die erfindungsgemässen Montageverfahren können insbesondere bei der Montage einer erfindungsgemässen Solaranlage zum Einsatz kommen.

Die Erfindung wird nachfolgend anhand bevorzugter Ausführungsbeispiele näher erläutert, die schematisch in den beiliegenden Figuren dargestellt sind. In den Figuren zeigen schematisch:
- Figur 1:: eine perspektivische Darstellung einer Photovoltaikanlage mit einer Ausführungsform einer elektrischen Leiteranordnung;
- Figur 2:: eine Detailansicht der Leiteranordnung aus Figur 1 in einer teilweise längs der Gewindestange geschnittenen Ansicht; und
- Figur 3:: eine Detailansicht der Leiteranordnung aus Figur 1 in der Querschnittsansicht A-A aus Figur 2.

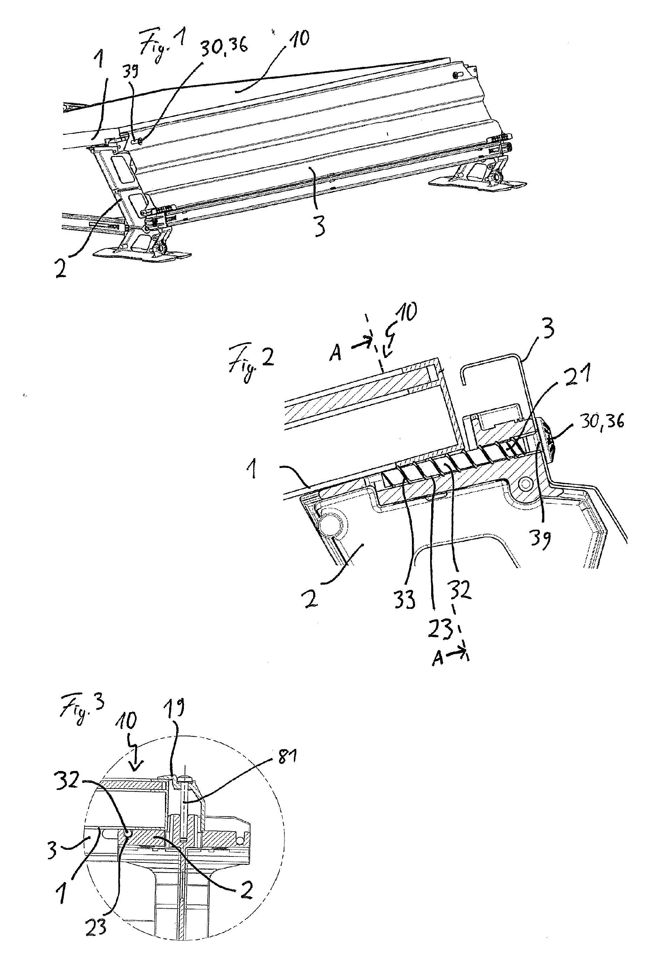

In den Figuren ist eine Ausführungsform einer erfindungsgemässen Photovoltaikanlage mit einer erfindungsgemässen elektrischen Leiteranordnung dargestellt. Die Photovoltaikanlage weist ein Solarmodul 10 auf. Dieses Solarmodul 10 ist mit einem Rahmen versehen, der ein erstes elektrisch leitfähiges Element 1 bildet. Die Photovoltaikanlage weist ferner eine Unterkonstruktion auf, die ein zweites elektrisch leitfähiges Element 2 bildet. Das zweite Element 2, d.h. die Unterkonstruktion, trägt das Solarmodul 10 derart, dass das Solarmodul 10 zur Horizontalen geneigt verläuft. Die Photovoltaikanlage weist ferner einen Windabweiser auf, der ein drittes elektrisch leitfähiges Element 3 bildet. Das als Windabweiser ausgebildete dritte Element 3 besteht aus einem schräg zur Horizontalen verlaufenden Blech, das benachbart zu einer oberen Kante des Solarmoduls 10 angeordnet ist, und das einen Zugang in einen unterhalb des Solarmoduls 10 befindlichen Raum teilweise schliesst. Zum Festlegen des Solarmoduls 10 mit dem ersten leitfähigen Element 1 an dem als Unterkonstruktion ausgebildeten zweiten Element 2 können - der Übersichtlichkeit halber nur in Figur 3 gezeigte - Modulklemmen 19 vorgesehen sein, welche das Solarmodul 10 an das zweite Element 2 anpressen. Die Modulklemmen 19 weisen jeweils eine Schraube 81 auf, wobei das Gegengewinde der Schraube 81 im zweiten Element 2 vorgesehen ist.

Um zum Zwecke der Erdung eine elektrische Verbindung zwischen dem als Rahmen ausgebildeten ersten Element 1 und dem die Unterkonstruktion bildenden zweiten Element 2 herzustellen, ist zumindest eine metallische Schraube 30 mit einem Schraubenkopf 36 und einer mit einem Gewinde 33 versehenen Stange 32 vorgesehen, die den Schaft der Schraube 30 bildet. Diese Schraube 30 ist in das zweite Element 2 eingeschraubt. Im Bereich des Schraubenkopfes 36 verläuft die Stange 32 durch eine Führungsbohrung 21 im zweiten Element 2 hindurch. Im Bereich ihres freien Endes verläuft die Stange in einer Nut 23, die im zweiten Element 2 ausgebildet ist. Dabei ist die Stange 32 im Bereich der Nut 23 längs der Unterseite des ersten Elements 1 ausgerichtet und steht zumindest mit ihrem Gewinde 33 über den Rand der Nut 23 über, so dass das Gewinde 33 in das erste Element 1 einschneiden kann, mit der Folge, dass eine nichtleitende Deckschicht am ersten Element 1 durchbrochen ist und ein elektrischer Kontakt zwischen der Stange 32 und dem ersten Element 1 hergestellt ist. Das Gewinde 33 schneidet überdies auch in das zweite Element 2 ein, und zwar insbesondere im Bereich der Nut 23.

Die Stange 32 ist mithin im Bereich der Nut 23 zwischen dem ersten Element 1 und dem zweiten Element 2 eingebettet, d.h. insbesondere, dass sie dort einen Zylinderabschnitt aufweist, der sowohl am ersten Element 1 als auch am zweiten Element 2 anliegt. Die Modulklemme 19 presst das erste Element 1 am zweiten Element 2 an und verpresst dabei die Stange 32 zwischen den beiden Elementen 1 und 2.

Das als Windabweiser ausgebildete dritte Element 3 weist eine Durchgangsöffnung 39 auf, durch welche die Stange 32 hindurchgeführt ist, wobei der Schraubenkopf 36 am dritten Element 3 anliegt und das dritte Element formschlüssig am zweiten Element 2 sichert. Die Schraube kann somit auch das dritte Element 3 elektrisch mit dem zweiten Element 2 verbinden.

Bei der Montage der dargestellten Anordnung kann vorgesehen sein, zunächst das erste Element 1 mittels der Modulklemme 19 am zweiten Element 2 zu sichern. Sodann kann die Schraube 30 in das zweite Element 2 eingeschraubt werden. Das im Bereich der Nut 23 über die Auflagefläche für das Solarmodul 10 aus dem zweiten Element 2 herausragende Gewinde 33 kann sich während des Einschraubvorgangs durch eine elektrisch isolierende Schicht des ersten Elements 1 einfurchen and dabei eine elektrisch leitende Verbindung zwischen dem ersten Element 1 und dem zweiten Element 2 herstellen. Durch die Positionierung der Schraube 30 relativ zum Solarmodul 10 kann dabei die Furchtiefe bestimmt werden. Alternativ kann vorgesehen sein, dass zuerst die Schraube 30 und dann das erste Element 1 am zweiten Element 2 montiert wird. In diesem Fall drückt sich das Gewinde 33 durch die Klemmkraft der Modulklemme 19 durch die elektrisch isolierende Schicht in das Aluminium des ersten Elements 1 und stellt dabei die elektrisch leitende Verbindung her. Durch die Erfindung kann somit die Erdungsfunktion unabhängig von der Montagereihenfolge gewährleistet werde.

## Patentansprüche

1. Elektrische Leiteranordnung mit
einem ersten elektrisch leitfähigen Element (1),
einem zweiten elektrisch leitfähigen Element (2), und
einer elektrisch leitfähigen und mit einem Gewinde (33) versehenen Stange (32), über welche die beiden Elemente (1, 2) miteinander in elektrischem Kontakt stehen,
**dadurch gekennzeichnet,**
**dass** die Stange (32) zumindest abschnittsweise zwischen den beiden leitfähigen Elementen (1, 2) eingebettet ist.

2. Anordnung nach Anspruch 1,
**dadurch gekennzeichnet,**
**dass** das zweite Element (2) eine Führungsbohrung (21) aufweist, durch welche die Stange (32) hindurchgeführt ist.

3. Anordnung nach einem der vorstehenden Ansprüche,
**dadurch gekennzeichnet,**
**dass** das zweite Element (2) eine Nut (23) aufweist, in der die Stange (32) verläuft.

4. Anordnung nach einem der vorstehenden Ansprüche,
**dadurch gekennzeichnet,**
**dass** die Stange (32) durch ein drittes elektrisch leitfähiges Element (3), insbesondere einen Windabweiser, hindurchgeführt ist.

5. Anordnung nach einem der vorstehenden Ansprüche,
**dadurch gekennzeichnet,**
**dass** die Stange (32) einen Schraubenkopf (36) aufweist.

6. Anordnung nach Anspruch 4 und 5,
**dadurch gekennzeichnet,**
**dass** der Schraubenkopf (36) das dritte Element (3) formschlüssig fixiert.

7. Anordnung nach einem der vorstehenden Ansprüche,
**dadurch gekennzeichnet,**
**dass** das erste Element (1) und/oder das zweite Element (2) eine Negativform für das Gewinde (33) aufweist, in welcher das Gewinde (33) teilweise aufgenommen ist.

8. Anordnung nach einem der vorstehenden Ansprüche,
**dadurch gekennzeichnet,**
**dass** das erste Element (1) und/oder das zweite Element (2) zumindest im Bereich der Stange (32) Aluminium aufweist und dass die Stange (32) eine Zink-Nickel-Beschichtung aufweist.

9. Solaranlage, insbesondere Photovoltaikanlage, mit einer elektrischen Leiteranordnung nach einem der vorstehenden Ansprüche, wobei das erste Element (1) ein Rahmen eines Solarmoduls (10) ist und das zweite Element (2) eine Unterkonstruktion des Solarmoduls (10) ist.

10. Verfahren zur Montage einer Anordnung nach einem der Ansprüche 1 bis 8, bei dem zunächst die beiden Elemente (1, 2) mittels zumindest einer Modulklemme (19) aneinander befestigt werden und anschliessend die Stange (32) zwischen die Elemente (1, 2) eingeschraubt wird.

11. Verfahren zur Montage einer Anordnung nach einem der Ansprüche 1 bis 8, bei dem zunächst die Stange (32) am zweiten Element (2) angeordnet wird und anschliessend die beiden Elemente (1, 2) mittels zumindest einer Modulklemme (19) aneinander befestigt werden.
